# EUROPÄISCHE PATENTANMELDUNG

(11) **EP 1 614 584 A2**
(43) Veröffentlichungstag der Anmeldung: **11.01.2006**
(21) Anmeldenummer: 05014783.4
(22) Anmeldetag: 07.07.2005
(51) Int. Cl.: B60N 3/04, B29C 45/14, B29C 70/76

(54) **Einlegematte, insbesondere für Fahrzeuge sowie Verfahren und Vorrichtung zu deren Herstellung**

(30) Priorität: 09.07.2004 DE 102004033323
(71) Anmelder: Stankiewicz GmbH, D-29352 Adelheidsdorf (DE)
(72) Erfinder: Ebel, Ralf, 38112 Braunschweig (DE); Freser-Wolzenburg, Thomas, 30827 Garbsen (DE); Püschmann, Eberhard, 29336 Nienhagen (DE); Hoffmann, Manfred, 29364 Langlingen (DE)
(74) Vertreter: Melzer, Wolfgang

(57) **Zusammenfassung**

Die Erfindung gibt eine Einlegematte (1,21) insbesondere für Fahrzeuge an, wobei ein teppichartiger Mattenzuschnitt (2,22) entweder von einer nur randseitig vorgesehenen Umrandung (3) aus Zweikomponenten-Polyurethanmaterial umgeben ist, oder in ein Trägerteil (24) mit Umrandung (23) aus Zweikomponenten-Polyurethanmaterial fest aber lösbar einsetzbar ist, etwa durch Klemmung. Die Umrandung kann beliebig gestaltet sein. Die Einlegematte (1,21) ist kostengünstig, auch in Kleinserie, herstellbar.

## Beschreibung

Die Erfindung betrifft eine Einlegematte für insbesondere Fahrzeuge, bestehend aus einem teppichartigen Mattenzuschnitt und einer Umrandung davon, bzw einem eine Umrandung aufweisenden Trägerteil davon, sowie ein Verfahren und eine Vorrichtung zu deren Herstellung.

Es ist Stand der Technik ganz allgemein zum Schonen der serienmäßig vorgesehenen Teppiche im Fußbodenbereich von Fahrzeugen insbesondere Personenkraftwagen, sogenannte Einlegematten vorzusehen. Diese bestehen aus einem teppichartigen Mattenzuschnitt, wobei die Ränder des Zuschnittes umbördelt, d.h. herkömmlich umnäht, sind. Derartige Einlegematten gibt es in unterschiedlichen Ausführungsformen, typisch sind einerseits fahrzeugneutrale Ausführungen, bei denen der Mattenzuschnitt im Wesentlichen rechteckförmig ist, sowie fahrzeugspezifische Ausführungen, bei denen dem Fahrzeugtyp und der Anordnung in diesem Fahrzeug entsprechende spezifische Mattenzuschnitte vorgesehen sind. Solche Einlegematten dienen dazu, den aus der Umgebung über die Schuhe hereingetragenen Schmutz und hereingetragene Feuchte aufzunehmen, wobei der hereingetragene Schmutz von zu Zeit zu Zeit durch Herausnahme der Einlegematte und Reinigen entfernt wird. Ferner schont eine solche Einlegematte stark beanspruchte Teile des serienmäßigen Teppichs im Fußbodenbereich des Fahrzeugs. Zur Verhinderung von Funktionsstörungen im Pedalbereich, die die Fahrsicherheit gefährden könnten, ist es üblich, Einlegematten dieser Art bodenseitig rutschhemmend auszurüsten.

Das Umbördeln durch Umnähen ist offensichtlich sehr umständlich und aufwändig, erfolgt jedoch eine solche Umbördelung nicht, sind die Ränder des Zuschnittes äußerst verschleißanfällig, insbesondere können sie sehr leicht knicken und einreißen.

Es ist daher schon versucht worden, den Rand eines solchen Zuschnittes durch Vorsehen eines Kunststoffkörpers zu schützen. Die US 4,491,556 gibt ein Werkzeug mit Oberform und Unterform an, wobei die Unterform einen teppichartigen Mattenzuschnitt aufnimmt. Das beim Schließen des Werkzeuges entstehende Spaltmaß zwischen der Mattenzuschnitt-Unterseite und der Unterform wird im Spritzgießverfahren mittels thermoplastischer Harze vollständig ausgefüllt. Somit wird der Mattenzuschnitt vollständig hinterspritzt und wird beim Abkühlen eine feste Verbindung zwischen den Fasern der Rückseite des Mattenzuschnittes einerseits und dem thermoplastischen Harz andererseits erreicht, wobei gleichzeitig eine Randeinfassung aus dem gleichen thermoplastischen Harz gebildet wird. Die Unterseite des abgekühlten thermoplastischen Harzes kann dabei zur Erreichung von Rutschsicherheit profiliert sein. Da thermoplastische Harze zu verarbeiten sind, sind teure Spritzgießwerkzeuge erforderlich, was wiederum zur Folge hat, dass diese Vorgehensweise nur bei hohen Stückzahlen einigermaßen wirtschaftlich ist.

Gemäß der DE-A1-37 12 882 wird ein teppichartiger Mattenzuschnitt rückseitig mit einer Zusatzlage sowie einem Vließ versehen, wobei die Zusatzlage eine EPDM-Schwerschicht ist, also eine Schicht aus synthetischem Kautschuk. Die Kunststoffkörper-Umrandung wird aus Polyurethan-Integralschaum erzeugt, wodurch eine geschlossene Oberfläche gebildet wird. Wesentlich ist, dass dabei in einen Randbereich des Flors des teppichartigen Mattenzuschnittes hineingeschäumt, bzw. hineingespritzt wird, um den festen Halt des Kunststoffkörpers der Umrandung an der Teppichlage zu gewährleisten. Anstelle eines Polyurethan-Integralschaums kann auch ein Zweikomponenten-Elastomer, ein Einkomponenten-Elastomer oder ein Thermoplast verwendet werden. Durch eine geeignete Ausbildung der Form kann erreicht werden, dass die Umrandung über ihren Gesamtverlauf unterschiedliche Abmessungen aufweist, insbesondere unterschiedlich breit ist. Allerdings ist dies nur in gewissem Umfang möglich.

Gemäß der WO 0,032,442-A1 wird ein Trägerteil vorgesehen, das eine erhöhte Umrandung aufweist, wobei der teppichartige Mattenzuschnitt in das Trägerteil einsetzbar und über die erhöhte Umrandung nach Art einer Schnappverbindung fixierbar ist, jedoch, etwa bei erhöhtem Verschleiß, wieder lösbar ist. Das Trägerteil besteht dabei wiederum aus einem Textilgewebe und ist daher nur kompliziert herstellbar. Allerdings kann dieses Trägerteil sehr variabel an bestimmte Fahrzeuge angepasst werden und spezifische Zusatzelemente aufweisen. Wenigstens eines der beiden Teile, nämlich hier das Trägerteil, ist nur äußerst kompliziert herstellbar, was die Kosten wesentlich erhöht, selbst wenn dieses Trägerteil nur geringem Verschleiß ausgesetzt ist.

Ein Dekormaterial rückseitig mit einem Trägermaterial zu versehen, das auch zumindest einen Teil des Randes einfasst, ist auch aus der EP 1 064 135 B1 bekannt, wobei das Material ein für ein Hinterpress- und/oder Hinterspitzverfahren geeigneter Kunststoff ist, wie Thermoplaste, dauerelastische Polymere oder thermoplastische Kautschuke.

Dem gegenüber ist es Aufgabe der vorliegenden Erfindung eine Einlegematte der eingangs genannten Art anzugeben, welches mit kostengünstigen Werkzeugen und damit niedrigen Kosten herstellbar ist und an unterschiedliche Abmessungen sehr einfach anpassbar ist.

Ferner sollen ein Verfahren zur Herstellung sowie eine Vorrichtung zur Herstellung angegeben werden.

Die Aufgabe wird bei einer Einlegematte durch die Merkmale des Anspruches 1 oder des Anspruches 2 gelöst.

Die Erfindung wird durch die abhängigen Ansprüche weitergebildet.

Ein Verfahren zur Herstellung ist im Anspruch 12 angegeben, eine Vorrichtung im Anspruch 13.

Gemäß einem Aspekt der Erfindung ist der teppichartige Mattenzuschnitt ausschließlich randseitig mit einer die herkömmliche Umbördelung ersetzenden Kunststoffumfassung umgeben, die aus einem Zweikomponenten-Polyurethanmaterial gebildet ist. Ein Hinterspritzen oder Hinterschäumen erfolgt nicht. Das Polyurethan fließt bei seiner Ausreagierung horizontal nur wenige Millimeter in den Flor des teppichartigen Mattenzuschnittes hinein und bewirkt dort nach der Aushärtereaktion eine feste Verbindung zwischen dem Polyurethan und dem Mattenzuschnitt, insbesondere in dessen Kantenbereich. Sowohl Rückseite als auch Oberseite der Umrandung können profiliert sein. Durch die erfindungsgemäße Ausgestaltung der Umrandung ist auch eine beliebige Formgebung im Bereich der Umrandung möglich. Beispielsweise kann die Umrandung etwas höher als die Florhöhe des Mattenzuschnittes gestaltet sein, wodurch durch Schuhe eingebrachter Schmutz nicht herausfallen kann. Der Übergang zwischen dem Mattenzuschnitt bzw. dessen Flor und der Oberseite der Umrandung kann allmählich sein. Auch die Breite der Umrandung ist beliebig formbar, so dass für viele unterschiedliche Fahrzeugtypen ein gleicher Mattenzuschnitt verwendbar ist und die Anpassung an den Fahrzeugtyp über die Umrandung insbesondere deren Breite erfolgt. Eine rutschhemmende Ausrüstung kann in beliebiger Weise vorgesehen sein, sofern sie erforderlich ist, wobei diese Ausrüstung bereits bei dem Rohmaterial für den Mattenzuschnitt erfolgt sein kann. Jede andere bekannte Art einer rutschhemmenden Ausrüstung, etwas das Vorsehen von Eingriffsteilen an der Rückseite, die in Verbindung mit auf dem Fahrzeugboden befestigen Stiften eine rutschfeste Verbindung ermöglichen, sind ebenso in gleicher Weise möglich. Schließlich kann das verwendete Kunststoffmaterial in einfacher Weise gefärbt werden, so dass eine einfache Anpassung an andere Designelemente eines Fahrzeuges ohne große Probleme möglich ist, was insbesondere bei hochpreisigen Fahrzeugen von kaufentscheidender Bedeutung sein kann.

Wesentlich ist in diesem Zusammenhang, dass ein einfaches Werkzeug, das im Regelfall aus Aluminium, aber auch aus Stahl oder anderen für den Formenbau geeigneten Werkstoffen, hergestellt ist und das nicht notwendigerweise beheizt werden muss, verwendet werden kann, so dass auch wirtschaftliche Herstellung bei niedrigen Stückzahlen möglich ist.

Gemäß einem anderen Aspekt der Erfindung wird ein eine vorzugsweise erhöhte Umrandung aufweisendes Trägerteil aus einem Zweikomponenten-Polyurethanmaterial gebildet, wobei dann der teppichartige Mattenzuschnitt vorzugsweise durch klemmendes Übergreifen dessen Randes durch die Umrandung fest aber lösbar mit dem Trägerteil verbindbar ist. Auch hier ist aus den gleichen vorgenannten Gründen kostengünstige Herstellung insbesondere wegen niedriger Werkzeugkosten möglich und kann das Trägerteil auch bei einfach ausgebildetem Zuschnitt in einfacher Weise an fahrzeugspezifische Notwendigkeiten oder Vorgaben angepasst werden. Bei dieser Ausführungsform können auch andere Eingriffselemente für feste aber lösbare Verbindung zwischen Mattenzuschnitt und Trägerteil verwendet werden, wie Vor- und Rücksprünge, die fest aber lösbar ineinander eingreifen können. Wie beim Stand der Technik kann der Zuschnitt vom Trägerteil zu Reinigungs- oder Austauschzwecken leicht gelöst werden, das Trägerteil jedoch ist kostengünstig herstellbar mit den zusätzlichen vorgenannten Vorteilen.

Die Erfindung wird anhand der in der Zeichnung dargestellten Ausführungsbeispiele näher erläutert. Es zeigen
- Fig. 1: perspektivisch die Oberseiten einer ersten Ausführungsform einer erfindungsgemäßen Einlegematte,
- Fig. 2: die Rück- bzw. Unterseite der Einlegematte gemäß Fig. 1,
- Fig. 3: schematisch in Aufsicht die Ausbildung einer Unterform zur Herstellung einer Einlegematte insbesondere einer Einlegematte gemäß den Fig. 1 und 2,
- Fig. 4: schematisch im Schnitt eine Einlegematte gemäß einer zweiten Ausführungsform der Erfindung,
- Fig. 5: schematisch im Schnitt ein alternatives Ausführungsbeispiel der Ausführungsform gemäß Fig. 4,
- Fig. 6: schematisch im Schnitt ein anderes Ausführungsbeispiel der Ausführungsform gemäß Fig. 4 und
- Fig. 7: ein weiteres Ausführungsbeispiel des Ausführungsbeispiels gemäß Fig. 4.

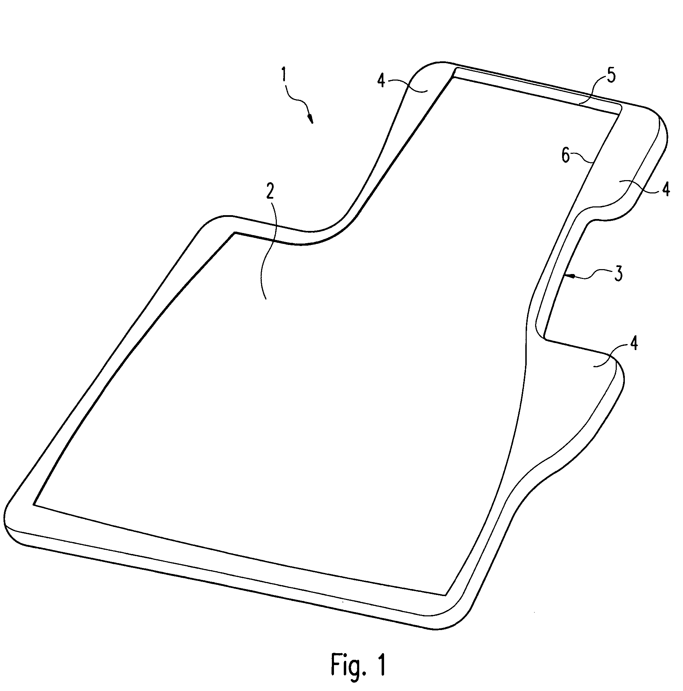

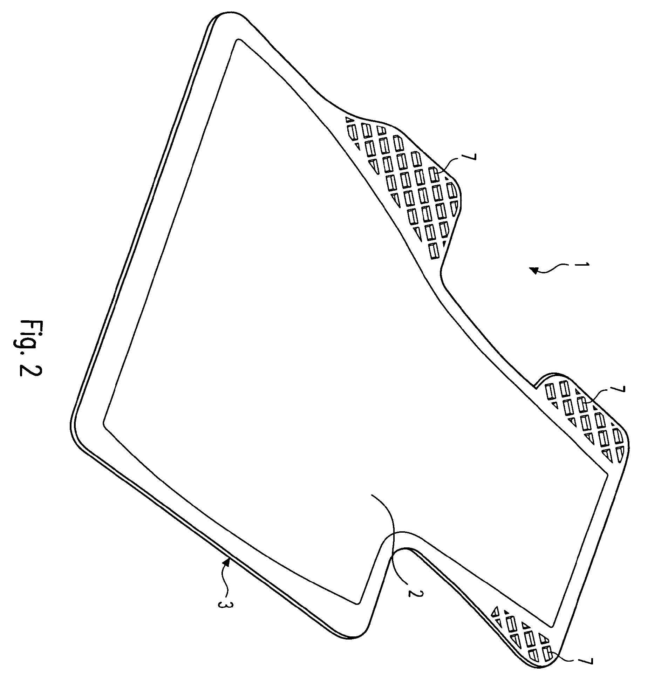

Die Fig. 1 und 2 zeigen zunächst eine Einlegematte 1 gemäß einer ersten Ausführungsform der vorliegenden Erfindung. Sie besteht aus einem teppichartigen Mattenzuschnitt 2 und einer angeformten Umrandung 3, die aus einem Zweikomponenten-Polyurethanmaterial gebildet ist. Die Umrandung 3 kann vergleichsweise schmal sein, kann jedoch auch verbreiterte Bereiche 4 aufweisen. Die Umrandung 3 ist typisch und vorteilhaft, jedoch nicht notwendigerweise, etwas höher als die Oberseite des teppichartigen Mattenzuschnittes 2 bzw. des Teppichflors und kann zu diesem zum einen allmähliche Übergänge, wie bei 5 dargestellt, und zum anderen vergleichsweise scharfe Übergänge, wie bei 6 dargestellt, aufweisen.

Es zeigt sich, dass in der Oberseite der Umrandung 3 insbesondere in deren verbreiterten Bereichen 4 Stilelemente und Verzierungselemente aber auch Logos etwa von Fahrzeugherstellern angebracht werden können. Darüber hinaus können auch Profilierungen vorgesehen sein, etwa für die Abstützung der Ferse eines Schuhs im Bereich eines Pedals des Fahrzeuges. Derartige Ausstattungen sind in Figur 1 nicht dargestellt.

Figur 2, die die Rück- bzw. Unterseite der Einlegematte 1 zeigt, zeigt auch die Rückseite des teppichartigen Mattenzuschnittes 2 und zeigt ferner, dass in der Umrandung 3 insbesondere deren verbreiterten Bereichen 4 an der Unterseite Profilierungen 7 vorgesehen sein können, die eine rutschhemmende Ausrüstung der Einlegematte 1 darstellen.

Es zeigt sich, dass die Profilierung der Außenkontur der Umrandung 3 der Einlegematte 1 unabhängig von der Profilierung der Außenumrandung des teppichartigen Mattenzuschnittes 2 gestaltet werden kann. Dies bedeutet, dass einfach gestaltete, und daher in größerer Serie herstellbare Mattenzuschnitte 2 verwendet werden können, während die Außenkontur der Umrandung 3 sehr konturiert und an bestimmte fahrzeugspezifische Vorgaben angepasst sein kann.

Es zeigt sich weiter, dass die Profilierungen 7 insbesondere auch in Verbindung mit einer sehr weitgehend formschlüssige Einpassbarkeit der Einlegematte 1 in ein bestimmtes Fahrzeug bereits eine ausreichende rutschhemmende Ausrüstung darstellen. Selbstverständlich ist es möglich, die Rückseite des teppichartigen Mattenzuschnittes 2 selbst zusätzlich oder alternativ rutschhemmend auszurüsten, wobei diese rutschhemmende Ausrüstung bereits bei der Herstellung des Ausgangsmaterials für den teppichartigen Mattenzuschnitt 2 vorgesehen werden kann. Selbstverständlich ist es auch möglich (nicht im Einzelnen dargestellt) die Rückseite der Umrandung 3 und/oder der Rückseite des teppichartigen Mattenzuschnittes 2 mit zusätzlichen Verbindungsmitteln zu versehen, die mit entsprechend korrespondieren Verbindungsmitteln, die in einem Fahrzeugboden fest vorgesehen sind, korrespondierend zusammenwirken können, um eine feste aber lösbare Verbindung vorzusehen. In solchen Fällen ist eine rutschhemmende Profilierung 7 nicht mehr erforderlich.

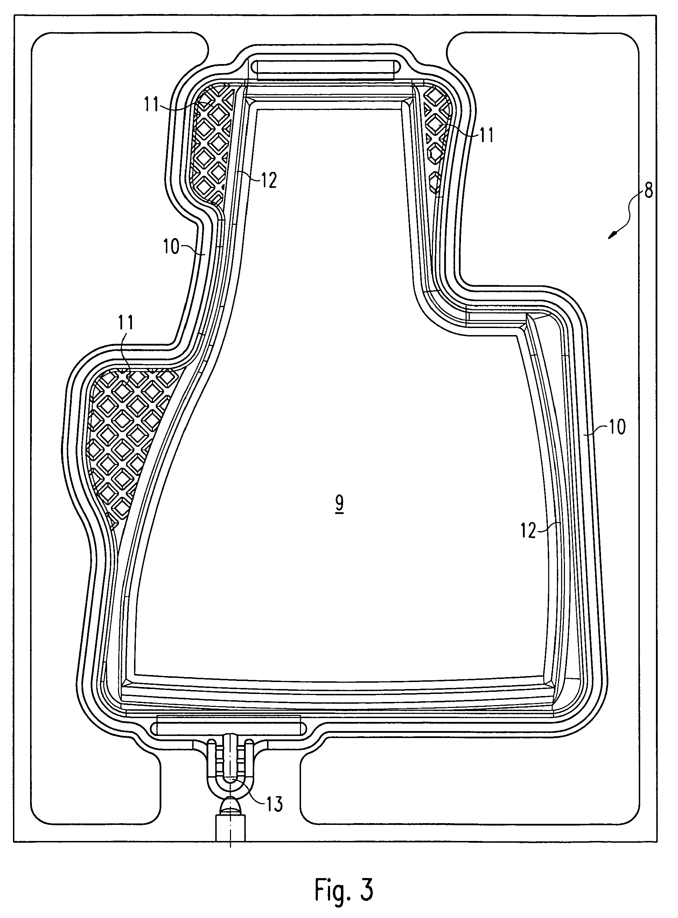

Figur 3 zeigt in Aufsicht ein Beispiel einer Unterform, wie sie für die Herstellung einer Einlegematte 1 gemäß den Figuren 1 und 2 verwendbar ist.

Die Unterform 8 enthält eine Aufnahme 9, in die der teppichartige Mattenzuschnitt 2 einlegbar ist. Ferner ist eine Umrandungs-Vertiefung 10 vorgesehen, die einerseits die Außenkontur der Umrandung 3 definiert, sowie auch andererseits eine eventuelle Profilierung aufweist, die zu einer rutschhemmenden Profilierung 7 der Unterseite der Einlegematte 1 korrespondiert. Die Aufnahme 9 ist dabei gegenüber der Umrandungs-Vertiefung 10 durch einen den Mattenzuschnitt nachbildenden Einsatz 12 umrandet, dessen Verlauf derart ist, dass ein eingelegter teppichartiger Mattenzuschnitt 2 dort auf dem Einsatz 12 aufliegt unter Freigabe seiner Kante (nicht dargestellt) zur Umrandungs-Vertiefung 10.

Figur 3 zeigt ferner, dass die Unterform 8 einen Zuführkanal 13 für die Zufuhr des Zweikomponenten-Polyurethanmaterials aufweist. Selbstverständlich können mehrere solcher Zuführkanäle vorgesehen sein. Die nicht dargestellte Oberform weist eine korrespondierende Umrandungs-Vertiefung und einen korrespondierenden Einsatz auf, derart, dass bei geschlossener Form über den Zufuhrkanal 13 zugeführtes Zweikomponenten-Polyurethanmaterial sich nur in die Umrandungs-Vertiefung 10 bzw. die korrespondierende Umrandungs-Vertiefung der Oberform einfließen und dort ausreagieren kann. Das Zweikomponenten-Polyurethanmaterial umspritzt (umgießt) bzw. umschäumt dabei die Kante des teppichartigen Mattenzuschnitts 2. Dabei fließt das Polyurethan horizontal nur wenige Millimeter in den Flor des teppichartigen Mattenzuschnittes 2 hinein und bewirkt dort nach der Aushärtung eine feste Verbindung zwischen dem Polyurethanmaterial und dem teppichartigen Mattenzuschnitt 2 in dessen Kantenbereich und dem unmittelbar benachbarten Bereich.

Es zeigt sich ferner, dass die zur Umrandungs-Vertiefung 10 der Unterform korrespondierende Umrandungs-Vertiefung der Oberform ebenfalls Profilierungen für Gestaltungselemente, etwa Logos oder dergleichen, wie oben erläutert, aufweisen kann.

Die Verwendung des Zweikomponenten-Polyurethanmaterials erlaubt die Verwendung kostengünstiger Materialien für Oberform und Unterform, im allgemeinen Aluminium. Ferner müssen die Formen nicht beheizt werden. Ferner ist das verwendete Material auch ohne Treibmittelzusätze einsetzbar. Als Treibmittel, falls es verwendet wird, wird üblicherweise Wasser verwendet, das so dosiert werden kann, dass keine Weichschaumstruktur erzeugt wird, andererseits jedoch das Gewicht der Einlegematte 1, definiert auch durch das Gewicht der Umrandung 3, gezielt optimiert werden kann. Darüber hinaus kann das verwendete Zweikomponenten-Polyurethanmaterial in einfacher Weise eingefärbt werden, so dass Farbwünsche in einfacher Weise und in vorwählbarer Stückzahl berücksichtigt werden können (was beispielsweise bei Spritzgussverfahren nicht möglich ist).

Dadurch, dass das einfache kostengünstige Werkzeug (Oberform und Unterform) bereits bei niedrigen Stückzahlen wirtschaftliche Herstellbarkeit erlaubt, können Einlegematten 1 auch in Kleinserien wirtschaftlich sinnvoll hergestellt werden.

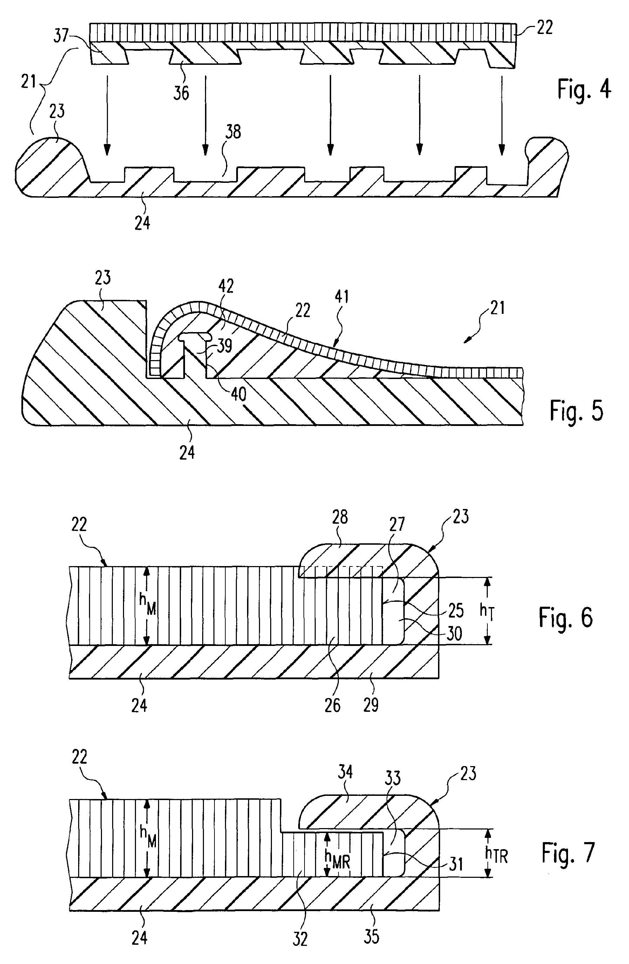

Die gleichen Vorteile aufgrund des verwendeten Materials ergeben sich auch bei der zweiten grundsätzlichen Ausführungsform der vorliegenden Erfindung, die mit Bezug auf die Figuren 4 bis 7 im folgenden erläutert wird. Der wesentliche Unterschied dieser zweiten Ausführungsform gegenüber der ersten Ausführungsform besteht darin, dass die Einlegematte 21 zwar wie zuvor aus einem teppichartigen Mattenzuschnitt 22 besteht, wobei ferner auch eine Umrandung 23 vorgesehen ist, zum Unterschied jedoch diese Umrandung 23 nicht an dem teppichartigen Mattenzuschnitt 22 fest und unlösbar angeformt ist, sondern Bestandteil eines separaten Trägerteils 24 ist, mit dem der teppichartige Mattenzuschnitt 22 fest aber lösbar verbindbar ist. Das die Umrandung 23 aufweisende Trägerteil 24 kann dabei an der Oberseite das gleiche Äußere aufweisen, wie dies anhand der ersten Ausführungsform ausführlich erläutert worden ist, nämlich schmale und verbreiterte Bereiche, allmähliche oder scharfe Übergänge zum teppichartigen Mattenzuschnitt 22, wobei selbstverständlich auch die dort erwähnten Prägungen, Vertiefungen, Profilierungen vorgesehen sein können. In gleicher Weise ist durch die Verwendung des Zweikomponenten-Polyurethanmaterials das Trägerteil 24 und damit auch die Umrandung 23 in einfacher Weise und auch mit niedrigen Stückzahlen einfärbbar und/oder im Verlauf der Außenkontur zur Anpassung an verschieden Fahrzeugtypen anpassbar, und zwar unabhängig von der Formgebung für den teppichartigen Mattenzuschnitt 22.

Wie erwähnt ist der teppichartige Mattenzuschnitt 22 mit dem Trägerteil 24 innerhalb dessen Umrandung 23 fest aber lösbar verbunden. Hierdurch kann der teppichartige Mattenzuschnitt 22 in einfacher Weise entnommen und beispielsweise gereinigt oder auch durch einen anderen teppichartigen Mattenzuschnitt ersetzt werden. Da wie erwähnt der teppichartige Mattenzuschnitt 22 in seiner Formgebung insbesondere Außenkontur, unabhängig von der Außenkontur der Umrandung 23 des Trägerteils 24 gestaltet sein kann, kann auch ein solcher Austausch kostengünstig sein, da der Vorrat an Teppich-Mattenzuschnitten 22 lediglich hinsichtlich Gestaltungselementen jedoch nicht hinsichtlich Konturelementen zu differenzieren ist.

Zwei einfache Möglichkeiten, eine feste aber lösbare Verbindung des teppichartigen Mattenzuschnitts 22 im Bereich der Umrandung 23 des Trägerteils 24 zu erreichen, sind in den Figuren 6 und 7 dargestellt. Diesen beiden Ausführungsbeispielen ist gemeinsam, dass ein Randbereich des teppichartigen Mattenzuschnitts 22 unter einen übergreifenden Abschnitt der Umrandung 23 des Trägerteils 24 einschiebbar ist und dort im eingeschobenen Zustand durch Klemmkraftwirkung festgehalten ist.

Gemäß Fig. 6 ist der teppichartige Mattenzuschnitt 22 an seiner Außenkante 25 zugeschnitten, so dass der teppichartige Mattenzuschnitt 22 ganzflächig, also auch im Randbereich 26, durchgehend die gleiche Höhe h_{M} besitzt. Im eine Klemmnut 27 bildenden Abschnitt der Umrandung 23 ragt ein lippenartiger Abschnitt 28 nach innen mit einem Abstand h_{T} zum bodenseitigen Abschnitt 29, wobei dieser Abschnitt h_{T} etwas kleiner ist als die Dicke, oder Florhöhe, h_{M} des teppichartigen Mattenzuschnitts 22, so dass nach Einschieben in die Klemmnut 27 eine feste aber lösbar Verbindung erreicht ist. Dabei kann ein freier Bereich 30 innerhalb der Klemmnut 27 vorgesehen sein.

Bei dem Ausführungsbeispiel gemäß Fig. 7 ist die randseitige Kante 31 des teppichartigen Mattenzuschnitts 22 nicht durch Zuschneiden sondern durch Prägen gestaltet, so dass in dem entsprechenden, der Kante 31 zugeordneten Randbereich 32 eine gegenüber der Höhe oder Dicke h_{M} des teppichartigen Mattenzuschnittes 22 eine dem gegenüber verringerte Randhöhe h_{MR} vorliegt. Die in der Umrandung 23 ausgebildete Klemmnut 33, die hier ebenfalls zwischen einem lippenartigen Abschnitt 34 und einem bodenseitigen Abschnitt 35 definiert ist, kann daher eine entsprechend niedrigere Höhe h_{TR} aufweisen. Hier wird die Klemmwirkung im Wesentlichen durch die Relaxationswirkung des abgeprägten Randbereiches 32 erreicht. Somit kann die Gesamthöhe der Umrandung niedriger gestaltet werden.

Zusätzlich oder alternativ sind auch andere Möglichkeiten denkbar, eine feste aber lösbare Verbindung zwischen dem teppichartigen Mattenzuschnitt 22 und dem Trägerteil 24 zu erreichen.

Fig. 4 zeigt ein Ausführungsbeispiel, bei dem an der Unterseite des teppichartigen Mattenzuschnitts 22 an vorgegebenen Stellen Vorsprünge 36 angeformt sind, etwa als Vorsprünge einer unterseitigen Beschichtung 37 des teppichartigen Mattenzuschnitts 22, die zu entsprechenden Vertiefungen 38 in dem Trägerteil 24 zwischen dessen Umrandung 23 korrespondierend ausgebildet sind. Die Vorsprünge 36 können dabei Wülste oder Verformungen aufweisen, die in die korrespondierend ausgebildeten Vertiefungen 38 einschnappend eingreifen.

Die Vorsprünge 36 können auch separat voneinander an der Unterseite des teppichartigen Mattenzuschnitts 22 selbst ohne Vorsehen einer Beschichtung 37 vorgesehen sein, etwa auch in Form eingesetzter Stifte oder Ähnlichem.

Es zeigt sich, dass selbstverständlich auch die Vorsprünge an dem Trägerteil 24 vorgesehen sein können, die in entsprechende Vertiefungen einer Beschichtung 37 des teppichartigen Mattenzuschnitts 22 oder auch in in dem teppichartigen Mattenzuschnitt 22 selbst vorgesehene Vertiefungen oder Durchbrüche eingreifen können.

Fig. 5 zeigt eine alternative Ausführungsform, bei der ohne eine Klemmverbindung gemäß Fig. 6 oder Fig. 7 lediglich nahe der Umrandung 23 des Trägerteils 24 von diesem stiftartige Vorsprünge 39 vorspringen, die in eine entsprechende Vertiefung 40 lediglich im Randbereich des teppichartigen Mattenzuschnittes 22 klemmend eingreifen. Der Eingriff kann dabei direkt in den teppichartigen Zuschnitt 22 erfolgen, auch diesen durchdringend, oder auch, wie dargestellt, in eine lediglich im Randbereich 41 des teppichartigen Mattenzuschnitts 22 vorgesehene rückseitige Beschichtung 42 derart, dass der teppichartige Mattenzuschnitt 22 dort wulstartig gegenüber dem restlichen Bereich erhöht ausgebildet ist und somit der teppichartige Mattenzuschnitt 22 insgesamt eine wannenartige Ausbildung aufweist.

Selbstverständlich sind Kombinationen der verschiedenen Möglichkeiten, eine feste aber lösbare Verbindung zu erreichen, möglich. Schließlich können auch Klettverbindungen vorgesehen sein, die nicht im einzelnen erläutert sind.

Es zeigt sich, dass auch dieses Ausführungsbeispiel in einfacher Weise rutschhemmend ausgebildet sein kann, wobei eine entsprechende Profilierung, wie sie in den Figuren 2 und 3 dargestellt ist, nicht nur in verbreiterten Bereichen der Umrandung an der Unterseite vorgesehen sein können, sondern ganzflächig, also in beliebigen frei wählbaren Bereichen. Schließlich kann bei dem Trägerteil 24, nicht im einzelnen dargestellt, auch eine feste aber lösbare Verbindung zum Fahrzeugboden erreicht werden, über an geeigneter Stelle nach Vorgabe des Fahrzeugherstellers, also nach Vorgabe eines Fahrzeugtyps vorgesehene Durchbrüche zur Aufnahme von Stiftelementen, wie sie zur Befestigung von Bodenteppichen nicht unüblich sind.

Zusammenfassend sind durch die Erfindung Einlegematten möglich, die zum einen konturfolgend ausgebildet werden können, wobei zum anderen die Herstellung kostengünstig und in einfacher Weise anpassbar ist.

Selbstverständlich ist die Erfindung nicht auf die Herstellung von Einlegematten für Fahrzeuge beschränkt sondern kann auch für die Herstellung von Einlegematten für andere Zwecke, etwa in Gebäuden, verwendet werden.

## Patentansprüche

1. Einlegematte für insbesondere Fahrzeuge,
bestehend aus einem teppichartigen Mattenzuschnitt (2) und einer Umrandung davon,
**dadurch gekennzeichnet,**
**dass** die Umrandung (3) durch eine randseitige Umspritzung bzw. Umschäumung aus einem Zweikomponenten-Polyurethanmaterial gebildet ist.

2. Einlegematte für insbesondere Fahrzeuge,
bestehend aus einem teppichartigen Mattenzuschnitt (22) und einem eine Umrandung (23) aufweisenden Trägerteil (24), wobei der Mattenzuschnitt (22) innerhalb der Umrandung (23) fest aber lösbar angebracht ist,
**dadurch gekennzeichnet,**
**dass** das Trägerteil (24) aus einem Zweikomponenten-Polyurethanmaterial gebildet ist.

3. Einlegematte nach Anspruch 2,
**dadurch gekennzeichnet,**
**dass** die Umrandung (23) so ausgebildet ist, dass sie bei eingebrachtem Mattenzuschnitt (22) dessen Randbereich (26, 32) klemmend (27, 28, 34, 35) umgreift.

4. Einlegematte nach Anspruch 3,
**dadurch gekennzeichnet,**
**dass** der Randbereich (32) des Mattenzuschnitts (22) in seiner Dickenabmessung verringert, insbesondere abgeprägt, ist.

5. Einlegematte nach einem der Ansprüche 2 bis 4,
**dadurch gekennzeichnet,**
**dass** der Mattenzuschnitt (22) an seiner Unterseite zumindest randseitige Rück- oder Vorsprünge (36) aufweist, die mit korrespondierenden Vor- bzw. Rücksprüngen (38) des Trägerteils (24) zum Anklemmen des Mattenzuschnitts (22) am Trägerteil (24) zusammenwirken.

6. Einlegematte nach Anspruch 5,
**dadurch gekennzeichnet,**
**dass** der Mattenzuschnitt (22) zumindest randseitig eine Hinterspritzung oder Hinterschäumung (37, 42) aufweist, in der die Rück- oder Vorsprünge ausgebildet sind.

7. Einlegematte nach einem der Ansprüche 1 bis 6,
**dadurch gekennzeichnet,**
**dass** die Umrandung (3, 23) derart ausgebildet ist, dass deren Unterseite zumindest abschnittsweise Rippen bzw. Profilierungen (7) aufweist.

8. Einlegematte nach einem der Ansprüche 1 bis 7,
**dadurch gekennzeichnet,**
**dass** die Umrandung (3, 23) längs der Verlaufs des Randes des Mattenzuschnitts (2, 22) unterschiedlich breit (4) ist.

9. Einlegematte nach einem der Ansprüche 1 bis 8,
**dadurch gekennzeichnet,**
**dass** die Umrandung (3, 23) zumindest abschnittsweise mit ihrer Oberkante oberhalb der Florhöhe des Mattenzuschnitts (2, 22) verläuft.

10. Einlegematte nach einem der Ansprüche 1 bis 9,
**dadurch gekennzeichnet,**
**dass** die Umrandung zumindest abschnittsweise von ihrer Oberkante in Richtung zum Mattenzuschnitt (2, 22) einen allmählichen Übergang (5) aufweist.

11. Einlegematte nach einem der Ansprüche 1 bis 10,
**dadurch gekennzeichnet,**
**dass** die Umrandung (3, 23) in ihrer Oberseite Erhöhungen und/oder Vertiefungen aufweist, insbesondere in Form schmückender Stilelemente, Logos oder dergleichen und/oder zur Bildung vom Trittschutzflächen oder dergleichen.

12. Verfahren zur Herstellung einer Einlegematte für insbesondere Fahrzeuge, die aus einem teppichartigen Mattenzuschnitt (2) und einer Umrandung (3) besteht, mit den Schritten,
- Einlegen des Mattenzuschnitts (2) in eine Form,
- Schließen der Form,
- Einspritzen eines Zweikomponenten-Polyurethanmaterials in die Form derart, dass der Mattenzuschnitt (2) randseitig umspritzt bzw. umschäumt wird, ohne den Mattenzuschnitt (2) selbst zu hinterspritzen bzw. zu hinterschäumen und
- Entnehmen des umrandeten Mattenzuschnitts (2) aus der Form.

13. Vorrichtung zum Herstellen einer Einlegematte für insbesondere Fahrzeuge, die aus einem teppichartigen Mattenzuschnitt (2) und einer Umrandung (3) besteht,
**dadurch gekennzeichnet,**
**dass** eine Unterform (8) eine Aufnahme (9) zur lagesicheren Aufnahme des Mattenzuschnitts (2) aufweist, wobei eine Umrandungs-Vertiefung (10) die Aufnahme (9) umgibt und ein die Kontur des Mattenzuschnitts (2) nachbildender Einsatz (12) die Aufnahme (9) berandet, und eine korrespondierende Oberform vorgesehen ist, wobei beim Schließen der Form der Mattenzuschnitt (2) unter Freihalten dessen Kante festgelegt ist, derart, dass bei Einspritzen eines Zweikomponenten-Polyurethanmaterials dieses Zweikomponenten-Polyurethanmaterial in der Umrandungs-Vertiefung (10) ausreagiert und dabei mit dem Mattenzuschnitt (2) über dessen Kante eine feste Verbindung eingeht.

14. Vorrichtung nach Anspruch 13,
**dadurch gekennzeichnet,**
**dass** die Umrandungs-Vertiefung der Unterform (8), gegebenenfalls eine korrespondierende Umrandungs-Vertiefung der Oberform, zur Formung von Umrandungen (3) nach einem der Ansprüche 7 bis 11 ausgebildet ist.
